# EUROPEAN PATENT APPLICATION

(11) **EP 1 345 100 A2**
(43) Date of publication of application: **17.09.2003**
(21) Application number: 03251536.3
(22) Date of filing: 13.03.2003
(51) Int. Cl.: G05B 19/406

(54) **Machining center support system**

(30) Priority: 15.03.2002 JP 2002072576
(71) Applicant: Union Electronics Co., Ltd., Nagoya-city, Aichi 457-0827 (JP); Nagoya Industrial Science Research Institute, Nagaya-shi, Aichi 460-0008 (JP); AG Co., Ltd., Nagoya-city, Aicha 458-0911 (JP); Renaissance of Technology Corporation, Hamamatsu-city, Shizuoka 431-3126 (JP)
(72) Inventor: Kawai,Tadao of Kounichihaitsu 201, Nagoya-city, Aichi 467-0041 (JP); Okamoto, Yasumasa, Union Electronics Co., Ltd., Nagoya-city, Aichi 457-0827 (JP); Ohno, Makoto, AG Co., Ltd., Midori-ku, Nagoya-city, Aichi 458-0911 (JP); Kosugi, Takashi, Renaissance of Technology Corp., Hamamatsu-city, Shizuoka 431-3126 (JP)
(74) Representative: Senior, Alan Murray

(57) **Abstract**

When a machine body 3 of a machining center 2 is being used to machine a component based on CAM data, an in-process information processing module 1a transfers to a host computer 5 in-process information of the component which is obtained by integrally processing detection data output from a temperature sensor, a vibration sensor, etc. provided to the machine body 3, to cause the in-process information of the component to be displayed on a display of the host computer 5 in such a manner that the in-process information can be compared to CAD data. In such a manner, a person in charge of the machining center can obtain improvement information in a machining process of the component based on comparison between the in-process information and the CAD data, to thereby improve an efficiency of an experimental-production process, thus reducing a development period of a product.

## Description

The present invention relates to a machining center support system for supporting machining of a component at a machining center.

Recently, the service life of industrial products in a market has generally been decreasing, thus making more and more serious the competition in developments of the products. Therefore, it has been indispensable to reduce a period required to develop a product in order to survive the competition in the market by improving an efficiency of an experimental-production process of various components which comprise a product.

Conventionally, before a work is machined in real production by the body of a machine at a machining center in order to produce a desired component, this component is machined in experimental production. In this case, when CAD data of the component is created by a CAD/CAM computer to create CAM data from this CAD data, NC data created on the basis of this CAM data is transferred to a control panel of a machining center. The machining center control panel controls the machine body based on the NC data, to machine the component in experimental production. In this experimental-production process, a person in charge of the machining center listens to sound which is raised during machining to decide whether or not machining is acceptable or measures shape dimensions etc. of an experimental-production component as machined to decide whether or not the component is machined properly. Then, if it is not machined properly, he repeats experimental production in a trial-and-error manner until the experimental-production component is machined properly.

Thus, the person in charge of the machining center listens to sound which is raised during machining to decide whether or not machining is acceptable or measures shape dimensions etc. of an experimental-production component as machined to decide whether or not the component is machined properly, so that he often decides whether the machining is acceptable in accordance with his experience or hunch. Therefore, the experimental-production process of a desired component takes too much of time prior to its real-production machining by use of the machine body at the machining center, thus leading to a problem that it is impossible to reduce a development period of a product using these components.

In view of the above, it is an object of the present invention to provide a machining center support system which can improve an efficiency of an experimental-production process of a desired component prior to its real-production machining to thereby enable reducing a development period of a product using the component and also which can be easily applied to an existing machining center.

The above-mentioned problem can be solved by a machining center support system described in claims of the present invention.

According to a machining center support system of the first aspect of the present invention, when CAD data of a component is created by a CAD/CAM computer to create NC data from the CAD data, a machine body is operated according to the NC data, to machine the component. When an in-process condition of the machine body is detected by in-process condition detection means during machining of the component, in-process information output means processes in-process condition detection data detected by the in-process condition detection means, based on a processing program downloaded from a host computer. Then, when in-process information processed on the basis of the processing program is transferred via a communication network to the host computer, display means displays the in-process information on a display of the host computer in such a manner that it can be compared to the CAD data.

It is thus possible to display the in-process information on the display of the host computer in such a manner that it can be compared to the CAD data, so that the person in charge of the machining center can obtain improvement information for a machining process based on comparison between the in-process information and the CAD data. This makes it possible to improve the efficiency of an experimental-production process of a desired component prior to its real-production machining, thus reducing the development period of a relevant product.

Furthermore, by providing the in-process condition detection means and the in-process information output means to an existing machining center, a machining center support system can be constituted and so can be applied to the existing machining center easily.

According to a machining center support system of the second aspect of the present invention, in-process information can be presented as a database, thus enabling providing an electronic version of know-how of, for example, a skilled engineer.

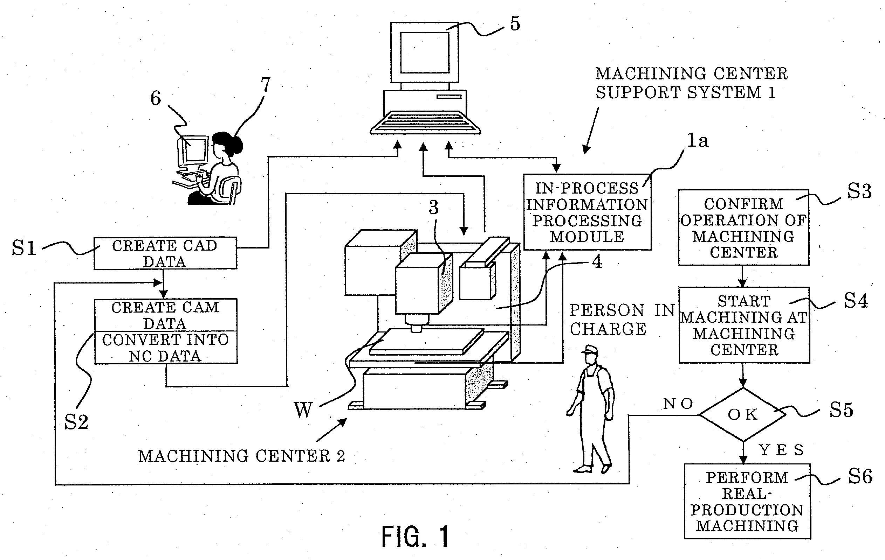

FIG. 1 is a system flow sheet for showing a configuration of a machining center support system along with that of a machining center.

The following will describe embodiments of the present invention.

FIG. 1 is a system flow sheet for showing a machining center support system 1 which improves an efficiency of an experimental-production process of a desired component prior to its real-production machining, along with an overall configuration of a machining center 2. It is to be noted that for convenience in explanation, this system flow sheet has a flowchart related to the machining center support system 1.

In FIG. 1, a machine body 3 of the machining center 2 is an NC working machine which is driven and controlled by a machining center control panel 4, which is connected with a host computer 5 via a Local Area Network (LAN). Furthermore, there is provided a CAD/CAM computer 6 which is operated by a computer operator 7, to create CAD data of a work W which is machined by the machine body 3 of the machining center 2 into a component and also create CAM data and NC data thereof. It is to be noted that this CAD/CAM computer 6 is connected via the LAN to the machining center control panel 4 as well as to-the host computer 5, so that CAD data created by the CAD/CAM computer 6 is transferred to the host computer 5 while, at the same time, CAM data is converted into NC data and transferred to the machining center control panel 4.

Although not shown, to the machine body 3 of the machining center 2 are there attached a tool temperature sensor for detecting the temperature of a tool blade, a drive motor temperature sensor, a work vibration sensor for detecting the vibration of the work W in process, a jig vibration sensor for detecting the vibration of a jig, a cutting load sensor, etc., which are arranged to output their respective detection data to in-process information processing module 1a of the machining center support system 1. That is, these sensors each function as in-process condition detection means for detecting the in-process condition of the machine body 3 of the machining center 2. It is to be noted that the in-process information processing module 1a of the machining center support system 1 is connected via the LAN to the host computer 5.

The in-process information processing module 1a of the machining center support system 1 uses, for example, a built-in type CPU at its pivotal place and has a data input interface, a program storage unit for storing a in-process information processing software program which is downloaded from the host computer 5 as described later, a data output interface, a network communication function, etc., thus receiving via the data input interface the detection data output from the above-mentioned tool temperature sensor, drive motor temperature sensor, work vibration sensor, jig vibration sensor, cutting load sensor, etc.

It is to be noted that in the case where the above-mentioned in-process information processing software program is to be downloaded from the host computer 5 to the in-process information processing module 1a, actually the host computer 5 downloads to the in-process information processing module 1a such a machining information processing software program as to correspond to a control code etc., transferred from the above-mentioned machining center control panel 4.

When the machining information processing software program that corresponds to the above-mentioned control code etc. is downloaded from the host computer 5 to the in-process information processing module 1a, the in-process information processing module 1a transfers through the data output interface, the network communication function, and the LAN to the host computer 5 in-process information which is obtained by integrally processing the detection data output from the above-mentioned tool temperature sensor, drive motor temperature sensor, work vibration sensor, jig vibration sensor, cutting load sensor, etc.

When the in-process information is thus transferred from the in-process information processing module 1a to the host computer 5, the host computer 5 displays the in-process information on a display in such a manner that this information can be compared to the above-mentioned CAD data. A person in charge of the machining center can thus compare the in-process information and the CAD data to each other to thereby obtain improvement information for altering, for example, a tool revolution speed or a tool path, so that he can correct the CAM data and the NC data based on this improvement information, thus improving a machining efficiency of an experimental-production component.

Furthermore, the host computer 5 stores CAD data of a component and tool management information beforehand and so can display a tool path of the machine body 3 along with a machining position of the component.

Moreover, the host computer 5 can transform the above-mentioned in-process information into a database and present it. It is thus possible to provide such an electronic version of machining know-how as that of a skilled engineer.

The following will describe actions of the machining center support system 1 along with running of the machining center 2.

As shown at step S1 of FIG. 1, when CAD data of a component obtained by machining the above-mentioned work W by the CAD/CAM computer 6 operated by the computer operator 7 is created, it is transferred to the host computer 5 as described above, while as shown at step S2 CAM data and NC data which are based on the CAD data are created at the CAD/CAM computer 6.

It is to be noted that when creating the CAM data, the process references tool information of the machining center 2 and material information of the work W stored as a database of the CAD/CAM computer 6. When the NC data thus created is transferred to the machining center control panel 4, the machine body 3 await a running start instruction from the machining center 2.

Upon completion of these preparations, the process confirms the operation of the machining center 2 at step S3 and then, at step S4, starts machining of the work W for experimental production of a component. In the experimental-production process of this component, the host computer 5 receives the above-mentioned in-process information output from the in-process information processing module 1a to display this in-process information on a display in such a manner that it can be compared to the above-mentioned CAD data of the component stored beforehand, based on these in-process information and CAD data.

At step S5, when the person in charge of the machining center compares the in-process information and the CAD data to each other on the display of the host computer 5 and if he decides that the experimental-production component is machined properly, the process shifts to real-production machining as shown at step S6. If he decides based on comparison between the in-process information and the CAD data that the experimental-production component is not properly machined, on the other hand, the process obtains improvement information at a component machining process from the information displayed on the above-mentioned display and returns to step S2, where it corrects the CAM data and the NC data in accordance with this improvement information so that the component may be machined. In such a manner, it is possible to improve the efficiency of the experimental-production process prior to the real-production machining of the component, thus reducing the development period of a product using a plurality of components.

It is to be noted that the above-mentioned machining center support system 1 can be easily applied to an existing machining center by attaching the above-mentioned various sensors to the machine body 3 and also providing the in-process information processing module 1a as well as the software program etc. for displaying in-process information output from this in-process information processing module 1a on the display of the host computer 5 in such a manner that it can be compared to the above-mentioned CAD data.

By the present invention, it is possible to improve the efficiency of an experimental-production process of a desired component prior to its real-production machining by the machine body of a machining center, thus reducing a development period of a product using a plurality of components. It is also possible to apply it to an existing machining center.

## Claims

1. A machining center support system which is applied to a machining center provided with a host computer, a CAD/CAM computer for creating CAD data of a component and also creating CAM data and NC data from said CAD data, and a machine body which is managed by said host computer and also operated in accordance with said NC data transferred from said CAD/CAM computer in order to machine said component, **characterized in that** said system comprises:
in-process condition detection means for detecting an in-process condition of said machine body;
in-process information output means for transferring via a communication network to said host computer in-process information which is obtained by processing in-process condition detection data detected by said in-process condition detection means based on a processing program downloaded from said host computer; and
display means for displaying on a display of said host computer said in-process information in such a manner that said in-process information can be compared to said CAD data.

2. The machining center support system according to claim 1, wherein said system comprises means for presenting said in-process information as a database.

3. A method of machining an experimental product generated based on CAD data comprising the steps of:
• machining said experimental product;
• detecting in-process condition of the machine body; and
• displaying in-process information on a display such that the in-process information can be compared to said CAD data.

4. A method according to claim 3 wherein CAM and NC data are created from the CAD data.

5. A method according to either claim 3 or claim 4 wherein said in-process information is compared to said CAD data.

6. A computer program comprising program code means that, when executed on a computer system instructs said computer system to detect the in-process condition of a machine body and displays said in-process information on a display such that said in-process information can be compared to CAD data.
